# EUROPEAN PATENT SPECIFICATION

(11) **EP 0 659 218 B1**
(45) Date of publication and mention of the grant of the patent: **19.03.1997**
(21) Application number: 93919348.8
(22) Date of filing: 31.08.1993
(51) Int. Cl.: C25B 1/12, C25B 15/00

(54) **PROCEDURE FOR CONTROLLING PRESSURE IN ELECTROLYSIS APPARATUS AND ELECTROLYSIS APPARATUS FOR PRODUCING HYDROGEN AND OXYGEN**
KONTROLLVERFAHREN FÜR DEN DRUCK IN EINER ELEKTROLYSEVORRICHTUNG UND ELEKTROLYSEVORRICHTUNG ZUR HERSTELLUNG VON WASSERSTOFF UND SAUERSTOFF
PROCEDE DE REGULATION DE PRESSION DANS UN DISPOSITIF D'ELECTROLYSE ET DISPOSITIF D'ELECTROLYSE SERVANT A PRODUIRE DE L'HYDROGENE ET DE L'OXYGENE

(30) Priority: 31.08.1992 FI 923905; 31.12.1992 FI 925966; 31.12.1992 FI 925967
(43) Date of publication of application: 28.06.1995
(73) Proprietor: NESTE OY, FIN-02150 Espoo (FI)
(72) Inventor: LEPPÄNEN, Jyrki, FIN-00970 Helsinki (FI); NIEMINEN, Jukka-Pekka, FIN-06400 Porvoo (FI); MIETTINEN, Mika, FIN-02150 Espoo (FI)
(74) Representative: Tiedtke, Harro, Dipl.-Ing.
(86) International application number: FI9300344
(87) International publication number: WO9405831

(56) References cited:
- DE-C- 597 180
- FR-A- 2 547 835
- US-A- 3 374 158

## Description

The present invention relates to a procedure for controlling pressure in an electrolysis apparatus producing hydrogen and oxygen by decomposing electrolytic liquid into hydrogen and oxygen with the aid of electric current. The invention also relates to an electrolysis apparatus for producing hydrogen in a variable-pressure electrolytic cell by decomposing electrolytic liquid with the aid of electric current into hydrogen and oxygen.

Hydrogen is an ideal and non-polluting source of energy in special applications in which no conventional energy sources are available. Therefore, for instance in devices using electric current and located in sparsely populated and rough regions solar panels can be used for producing electric current. Such installations are frequently unmanned and require automatic or remote control operations. Such installations need to be operating also when there is no sunlight. Storing electricity only in batteries would require a very large number of batteries, particularly in northern latitudes, said batteries being heavy and requiring maintenance.

Using hydrogen for storing energy is one of the means of recovering the surplus energy produced by solar cells, whereby water is decomposed into hydrogen and oxygen with the aid of electricity. In such instances electricity may, if needed, be produced with the aid of a fuel cell from hydrogen. In order to reduce the size of the hydrogen gas storages required, the hydrogen must, however, be pressurized and additional energy must be used for the pressurization.

It is known in the art to accomplish the decomposition of water into hydrogen and oxygen in electrolytic cells operating under pressure and thus producing hydrogen directly in pressurized form, so that no separate pressurization is needed.

A drawback in pressurizing an electrolytic cell is, however, increase of leakages.

It is also known in the art to place an electrolytic cell within a separate pressure shell, whereby the pressure difference between the inside and outside of the electrolytic cell substantially reduces and leakages decrease. Thus, in an apparatus as for instance in patent publication FR-2466515, the pressure shell has been pressurized with the aid of nitrogen gas, and the apparatus comprises means for maintaining the pressure within the electrolytic cell lower than the pressure of the pressure shell. Use of separate pressurizing gas requires, however, containers for the pressurizing gases and need of supplementing the pressurizing gas; the system disclosed in said patent is therefore not applicable for instance in apparatuses operating automatically by solar power in remote areas.

It is known in GB patent No. 1518234 to place the electrolytic plates inside the pressure shell, whereby the pressure of the hydrogen gas prevails inside the pressure shell. A closed electrolytic cell placed within a pressure shell is not, however, included in the design according to said patent, instead, the electrodes used in decomposing an electrolytic liquid (HCl) have been positioned hanging directly within the pressure shell. The apparatus disclosed in said patent is an apparatus intended for large-scale hydrogen production, having a very high power need, a complicated and expensive design, e.g. due to the devices needed in purification; in addition, the apparatus is not intended for oxygen recovery.

In Finnish patent application No. FI-923904, an electrolysis apparatus is disclosed for producing hydrogen from water, in which apparatus an electrolytic cell has been placed within a pressure shell filled with liquid, said pressure shell being maintained pressurized with the pressure of the gas produced in electrolysis. The liquid within the pressure shell is selected on the basis of e.g. the corrosion properties of the mantle, low electric conductivity, and the mutual appropriateness of the liquid and the pressurization gas used for the control.

The liquid-filled inner volume of the pressure shell can be connected, for instance with a pipe, to a gas source consisting of pressurized hydrogen or oxygen gas produced in the electrolytic cell. The pressure shell may thus be connected to any point located in the pipe system between the gas containers and the electrolytic cell. Preferably the pressure shell is connected by means of a pipe to the upper part of the water separator used in the water removal of the gas. Preferably such amount of the pressurization liquid is used that the liquid surface rises at least to some extent into the pipe transmitting the gas pressure.

However, the pressurization of the electrolytic cell requires that the pressure difference between the hydrogen side and the oxygen side (i.e. the hydrogen side and the water supply side) will not be too great because majority of the electrolytic cells commercially available do not structurally tolerate high pressure differences. Especially electrolytic cells with variable pressure and using electricity produced with the aid of solar cells therefore require pressure control systems which attend to maintaining the pressure difference between the hydrogen side and the oxygen side appropriate and sufficiently small. In systems known in the art the pressure control has in general been implemented using electrically operating control valves which consume electricity and therefore are not very appropriate for use in systems producing hydrogen autonomically with the aid of solar cells.

A problem in said system may also be the vaporization of the pressurization liquid or other form of travelling into the liquid circulation of the gas used in the pressurization and therethrough into the electrolytic cell. Since the pressurization liquid is frequently an oil, its entry into the electrolytic cell gradually causes reduction of performance of the cell.

With the aid of the present invention, a procedure for controlling pressure in electrolysis apparatus is produced so that the pressure difference between the oxygen side and the hydrogen side is maintained at a given value mechanically, whereby the control in a variable-pressure system is carried out automatically without consuming electricity.

Therefore, the invention relates to a procedure for controlling pressure in an electrolysis apparatus which produces hydrogen and oxygen by decomposing electrolytic liquid with the aid of electric current and which apparatus comprises a closed pressurized electrolytic cell for producing hydrogen and oxygen, a hydrogen line for conducting hydrogen out of the electrolytic cell into a hydrogen storage, an oxygen line for conducting oxygen out of the electrolytic cell, and feed means for supplying electrolytic liquid into the electrolytic cell. The procedure according to the invention is characterized in that between the pressure of the oxygen line and the pressure of the hydrogen line a given pressure difference is maintained by conducting the first product gas discharged from the system through one or more spring-loaded overflow valves so that the pressure prevailing in the line containing the second product gas is conducted to the spring side of the overflow valve.

The electrolytic liquid fed into the electrolytic cell contains water but it may contain any substances promoting the operation of the electrolytic cell used, such as acids or bases. The term "water" will below refer to any such electrolytic liquid.

In the procedure of the invention a mechanical, electricity not consuming and automatically operating pressure control is implemented by applying a conventional overflow valve in a modified form. A standard overflow valve comprises a metal diaphragm inserted in an appropriate housing, which diaphragm with the pressure of a spring placed under the diaphragm becomes depressed against the outlet aperture of gas or liquid, thus closing it. Only when the pressure of the gas or liquid exceeds the spring pressure, the flow may take place out of the outlet aperture. In the procedure of the invention for controlling the pressure of the oxygen line, the pressure of the hydrogen line is conducted to the spring side of the overflow valve, whereby the pressure difference between the pressures of the oxygen line and the hydrogen line is automatically maintained as high as the spring pressure. By controlling the spring pressure, the pressure difference can be set as desired. At the same time, the diaphragm of the overflow valve prevents the oxygen gas and the hydrogen gas from becoming into contact with each other.

Thus, in the above-described way a control system operating automatically and without electricity can be provided, in which care is taken that the pressures of the oxygen side and the hydrogen side automatically follow each other in the entire pressure area, which may vary greatly depending on the variable working pressure determined by the pressure prevailing at any given time in the hydrogen storage.

Maintaining a given relatively small pressure difference between the oxygen and the hydrogen sides is necessary because the structure of the electrolytic cell tolerates no high pressure differences. Especially along with an oxygen flow, large quantities of water are discharged, which according to the conventional technology can be separated from the gas using water separators and conducted back into the electrolytic cell with the aid of gravitation. Along with the hydrogen flow considerably smaller quantities of water are discharged, which can equally be separated from the hydrogen gas in a water separator. The water separated from the hydrogen gas can either be discharged entirely from the system or it can be returned to the electrolytic cell. The last-mentioned alternative however requires that a higher pressure must prevail in the water separator of the hydrogen side than in the oxygen side.

In such case that the water separated from the hydrogen gas is not recovered or it is not conducted directly back into the electrolytic cell, the pressure in the oxygen line can be maintained higher than the pressure in the hydrogen line. Hereby, the pressure of the hydrogen line is conducted to the spring side of the overflow valve in the oxygen line as such, whereby the spring pressure of the overflow valve attends to maintaining the pressure in the oxygen line higher than the hydrogen pressure by the amount of the spring pressure by discharging the excess oxygen out of the system.

In such case that also the water separated from the hydrogen gas is desired to be returned to the electrolytic cell, care thus has to be taken of that at least a somewhat higher pressure is prevailing in the water separator of the hydrogen side compared to that in the oxygen side, and likewise to that in the inlet side of the electrolytic cell. This can be implemented so that the pressure of the hydrogen side is not conducted as such to the spring side of the overflow valve in the oxygen line but it is lowered by a given amount, said amount being a bit greater than the spring pressure of the overflow valve. Said reduced hydrogen pressure can therefore be taken in, for instance after a back-pressure valve positioned in the hydrogen line, said back-pressure valve dropping the pressure of the hydrogen line by a desired amount. In this way it is achieved that the pressure in the hydrogen line is maintained higher than in the oxygen line and the water from the water separator of the hydrogen side can be returned for instance to the water separator of the oxygen side and back to the electrolytic cell.

According to a preferred embodiment of the procedure of the invention, the hydrogen pressure to the spring side of the overflow valve of the oxygen line can be taken optionally either before the back-pressure valve, or as reduced, thereafter, whereby the selection can be implemented for instance with the aid of a three-way valve. The latter procedure is adopted when the pressure after the back-pressure valve, i.e. the pressure of the hydrogen storage, is lower than the pressure of the hydrogen line. The former procedure is adopted when the pressure in the hydrogen line before the back-pressure valve is lower than after the back-pressure valve, for instance when the pressures in the electrolysis apparatus have been dropped down and the pressure of the electrolytic cell is increased to the pressure of the hydrogen storage. The three-way valve may preferably be replaced also by using another overflow valve. Hereby, the spring side of the second overflow valve is connected to a point in the hydrogen line which is located after the back-pressure valve and the spring side of the second overflow valve is connected with the hydrogen line before the back-pressure valve.

The present invention also concerns an electrolysis apparatus for producing hydrogen and oxygen by decomposing electrolytic liquid with the aid of electric current using the above-described pressure control method. The electrolysis apparatus according to the invention is characterized in that the apparatus comprises at least the following components:
(a) a closed pressurized electrolytic cell for producing hydrogen and oxygen with the aid of electric current,
(b) a hydrogen line for conducting hydrogen out of the interior of the electrolytic cell into a hydrogen storage,
(c) an oxygen line for conducting oxygen out of the interior of the electrolytic cell,
(d) feed means for supplying electrolytic liquid into the electrolytic cell, and
(e) means for maintaining a given pressure difference between the pressure of a first product-gas line and the pressure of a second product-gas line, said means comprising one or more overflow valves placed in the first product-gas line, and means for conducting the pressure of the second product-gas line to the spring side of the overflow valve.

Various embodiments of the control method and the electrolysis apparatus according to the present invention are described below more in detail, reference being made to the accompanying figures, in which:-
Fig. 1 presents an electrolysis apparatus in which the pressure of the oxygen gas is maintained higher than the pressure of the hydrogen gas,
Fig. 2 presents an equivalent apparatus in which the pressure of the hydrogen gas is maintained higher than the pressure of the oxygen gas,
Fig. 3 presents a modification of the apparatus shown in Fig. 2, in which the three-way valve has been replaced by another overflow valve,
Fig. 4 presents an electrolysis apparatus in which the pressure of the hydrogen line to the spring side of the overflow valve is transmitted hydraulically,
Fig. 5 presents an electrolysis apparatus which prevents the liquid in a pressure shell from entering in liquid or vapour form into the gas circulations of the apparatus, and
Fig. 6 presents an electrolysis apparatus which is provided with a safety means for lowering the pressure of hydrogen if the pressure of the oxygen side should drop for one reason or another.

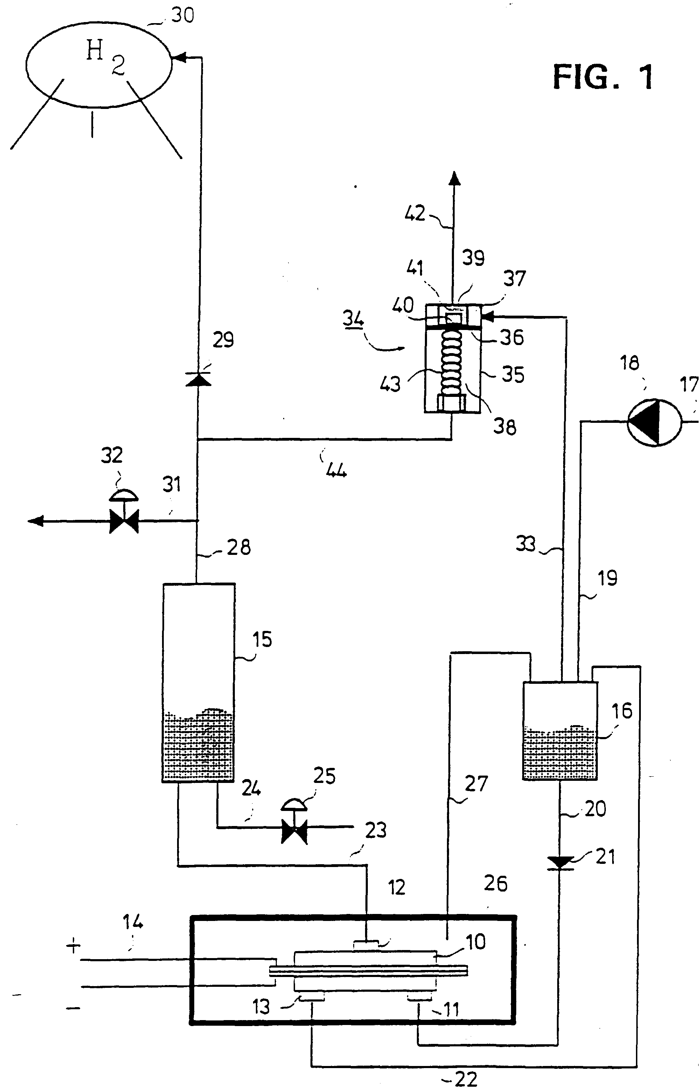

Fig. 1 presents a variable-pressure electrolytic cell 10 provided with an inlet connector 11 for electrolytic liquid, an outlet connector 12 for hydrogen gas, an outlet connector 13 for oxygen gas (oxygen/water mixture), and current supply leads 14. In the embodiment according to the figure also water separators 15 and 16 are shown for separating water from the hydrogen gas and, respectively, from the oxygen gas.

Electrolytic liquid is fed into the electrolytic cell 10 through a water pipe 17, a pump 18 and a water line 19 into the water separator 16 for oxygen gas and further through a water supply line 20, a back-pressure valve 21 and the inlet connector 11 for the electrolytic liquid to the electrolytic cell 10. The oxygen produced in the electrolytic cell and the water entering therewith are conducted through the oxygen outlet connector 13 and the oxygen outlet line 22 to the water separator 16 of oxygen. The water entering together with the oxygen gas is separated in the water separator 16, returning to the electrolytic cell 10 through the line 20 with the aid of gravitation.

The hydrogen gas produced in the electrolytic cell 10 is conducted through the hydrogen outlet connector 12 and the hydrogen outlet line 23 to the water separator 15 of hydrogen gas. The water separated from the gas in the water separator 15 is conducted off through a pipe 24 and a valve 25.

In an apparatus according to Fig. 1 a pressure shell system disclosed in Finnish patent applications FI-923903 and FI-923904 has moreover been applied, said system being maintained pressurized with the pressure of oxygen gas. Thus, a pressure shell 26 is presented in Fig. 1, within which an electrolytic cell 10 has been placed. The pressure shell 26 is preferably filled with an inert liquid, and the pressurization is advantageously carried out by conducting a pipe 27 into the pressure shell 26 from the water separator 16 of oxygen gas. Therefore, the pressure of the oxygen gas is prevalent in the pressure shell 26. It is to be noted, however, that regarding the invention, the use of a pressure shell is not by any means essential.

The hydrogen gas from the water separator 15 is conducted further through line 28 and a back-pressure valve 29 into a hydrogen storage 30. In addition, line 28 is provided with a discharge pipe 31 and a valve 32 for lowering the hydrogen pressure, e.g. for maintenance of the electrolysis apparatus.

Oxygen gas is conducted from the water separator 16 of the oxygen gas to an overflow valve 34 in line 33. The overflow valve 34 comprises a housing 35, which is divided with the aid of a sealed diaphragm 36 into two compartments 37 and 38. Compartment 37 includes a seat 39 provided with an aperture 40 and a channel 41 leading from the aperture 40 through the seat 39. The oxygen gas flows through line 33 into the compartment 37 of the overflow valve 34 and further through aperture 40 and channel 41 to the oxygen discharge pipe 42. The other compartment 38 of the overflow valve 34 comprises a spring 43 which at one end has been supported to the end of the housing 35 and at the other end to the diaphragm 36. Thus, the oxygen gas can flow through the aperture 40 and the channel 41 to the oxygen discharge pipe 42 only when its pressure exceeds a given value. An essential feature in the operation of the overflow valve 34 is furthermore that the compartment 38 including the spring 43 is also through line 44 connected to the hydrogen pressure, i.e. to line 28.

In an apparatus according to Fig. 1 the pressure control operates as follows. Against one side of the diaphragm 36 of the overflow valve 34 a pressure is directed both from the hydrogen line 28 and moreover from the spring 43 pressing the diaphragm 36 against the sides of the aperture 40 in the seat 39. Therefore, the oxygen is allowed to flow into the discharge pipe 42 only when the pressure of the oxygen in line 33 is higher than the sum of the pressure of the hydrogen line 28 and the spring pressure of spring 43. When oxygen is flowing, the pressure in the oxygen line 33 drops, until it is by the amount of the spring pressure of the spring 43 higher than the pressure in the hydrogen line 44 and 28, whereby the diaphragm 36 closes the aperture 40. Thus, the oxygen pressure conforms automatically to the pressure in the hydrogen line 28, however, remaining always higher than the hydrogen pressure in line 28. Advantages of the pressure control system disclosed are, above all, that the control is mechanical, thus not consuming any electric current, no separate control valves and pressure sensors are needed, and hydrogen is not consumed by the control.

If the pressures are desired to be discharged from the electrolysis apparatus, for instance for the sake of maintenance, the valve 32 in the discharge pipe 31 is opened and the hydrogen is allowed to flow out. Hereby, the pressure in line 44 drops and diaphragm 36 allows oxygen to flow into the discharge pipe 42, so that the oxygen pressure conforms to the decrease of the hydrogen pressure. The back-pressure valve 29 prevents the pressure of the hydrogen gas container 30 from discharging into the discharge pipe 31. When the apparatus is started again, the overflow valve 34 takes care of that the hydrogen pressure in line 28 before the back-pressure valve 29 increases and that the pressure of the oxygen gas in line 33 increases equally. When the hydrogen pressure in line 28 reaches the pressure of the hydrogen storage 30, the hydrogen gas starts flowing into the hydrogen storage 30.

As mentioned above, by adjusting the rigidness of the spring 43 of the overflow valve 34 the overpressure can be set to a desired value between the pressure of the oxygen line and the pressure of the hydrogen line. Although the absolute values of said pressures are in no way essential with regard to the operation of the apparatus, one may say that the overpressure of oxygen of the order 1 to 2 bar is appropriate in practice.

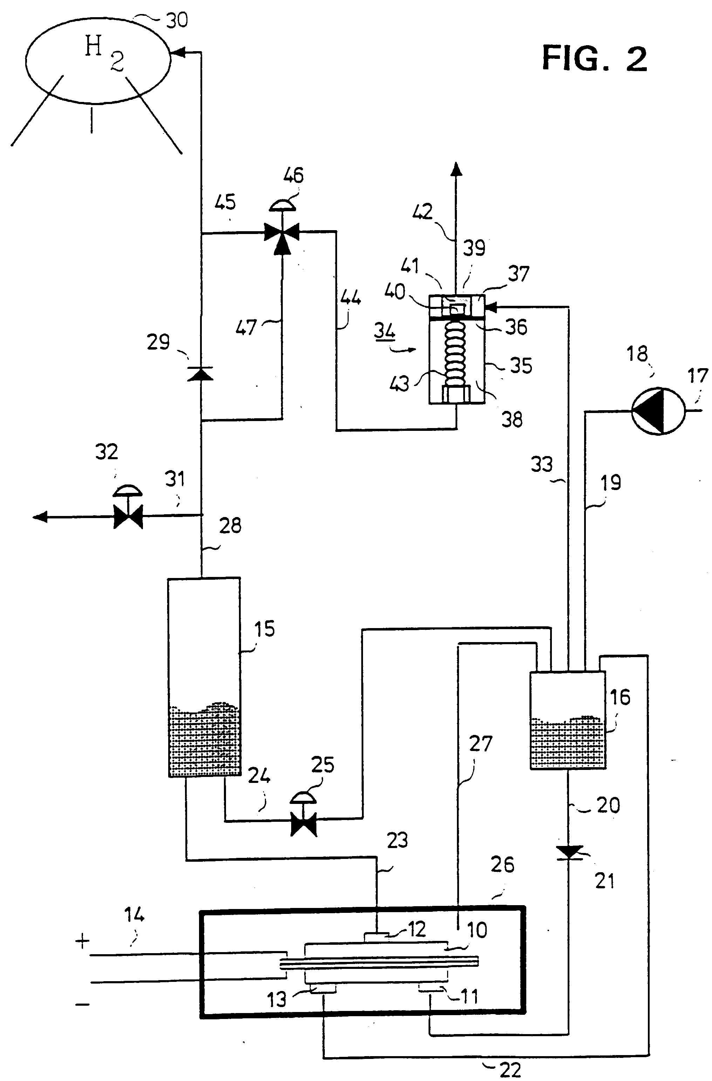

The embodiment presented in Fig. 2 differs from the one in Fig. 1 as follows. In this case the water separated in the water separator 15 of hydrogen gas is returned to the electrolytic cell 10 through the water separator 16 of the oxygen line. For that purpose, a pipe 24 has been connected to the water separator 16 of the oxygen line. In order to make the water returning successful, the pressure on the hydrogen side must be higher than on the oxygen side. On the other hand, the oxygen discharge operation of the overflow valve 34 requires that the oxygen gas pressure in line 33 must be higher than the sum of the spring pressure and the hydrogen pressure directed to the diaphragm 36.

For that purpose, the hydrogen pressure to the spring side of the overflow valve 34 is not conducted from the inlet side of the back-pressure valve 29 but through line 45 and a three-way valve 46 from the outlet side of the back-pressure valve 29. In addition, the back-pressure valve 29 has been arranged to provide a pressure drop which is greater than the spring pressure of the overflow valve 34. Once again, the absolute values of the pressures and pressure differences are not essential regarding the operation of the apparatus, but an appropriate spring pressure in the overflow valve 34 may be of the order of 1 to 2 bar and, respectively, a pressure drop in the back-pressure valve 29 may be of the order of 3 to 4 bar.

When in an apparatus shown in Fig. 2 the pressures of an electrolysis apparatus are desired to be dropped down, this is again accomplished through the discharge pipe 31 and the valve 32. Since the back-pressure valve 29 prevents any flow backwards, the hydrogen pressure on the spring side of the overflow valve 34 will not drop, and thus, neither will the oxygen pressure in line 33 allowed to go down. Therefore, a line 47 has been connected to the three-way valve 46, whereby the pressure on the spring side of the overflow valve 34 and, respectively, the oxygen pressure can be decreased through lines 44 and 47, when the communication through line 45 is closed. If desired, said operation.can be implemented automatically, but for that purpose, for instance pressure sensors (not shown) may be needed on both sides of the back-pressure valve 29 in the hydrogen line 28, whereby reversing the three-way valve 46 can, if desired, be arranged to operate automatically depending on whether the pressure of the hydrogen storage 30 is higher or lower than the pressure in line 28 before the back-pressure valve 29.

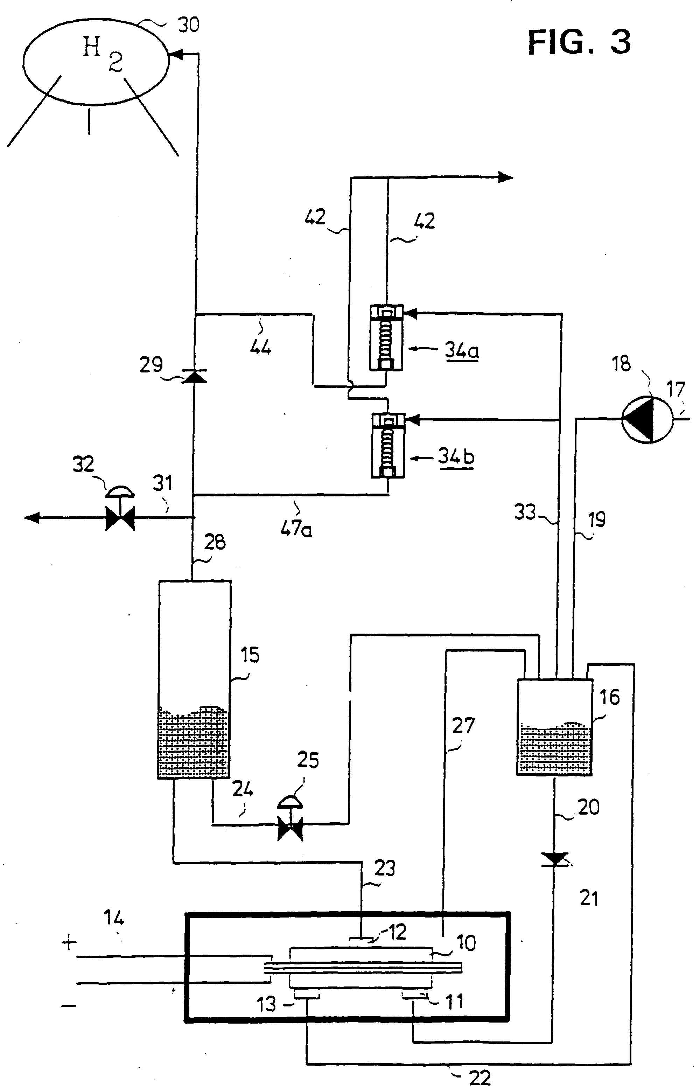

The apparatus according to Fig. 3 is in other respects similar to the apparatus shown in Fig. 2, with the exception that it includes two overflow valves 34a and 34b, to which the hydrogen pressure is conducted from different sides of the back-pressure valve 29 in the hydrogen line 28. To the spring side of the first overflow valve 34a, hydrogen pressure is conducted through line 44 from a point located after the back-pressure valve 29. To the spring side of the second overflow valve 34b the hydrogen pressure is conducted through line 47a from a point which is located before the back-pressure valve 29. Thus, the combination of the overflow valves 34a and 34b replaces the three-way valve 46 and the line 47 in an apparatus shown in Fig. 2. When the hydrogen pressure is lower before the back-pressure valve 29 than thereafter, controlling the oxygen pressure takes place with the aid of the overflow valve 34b, and when the hydrogen pressure is higher before the back-pressure valve 29 than thereafter, controlling the oxygen pressure takes place with the aid of the overflow valve 34a.

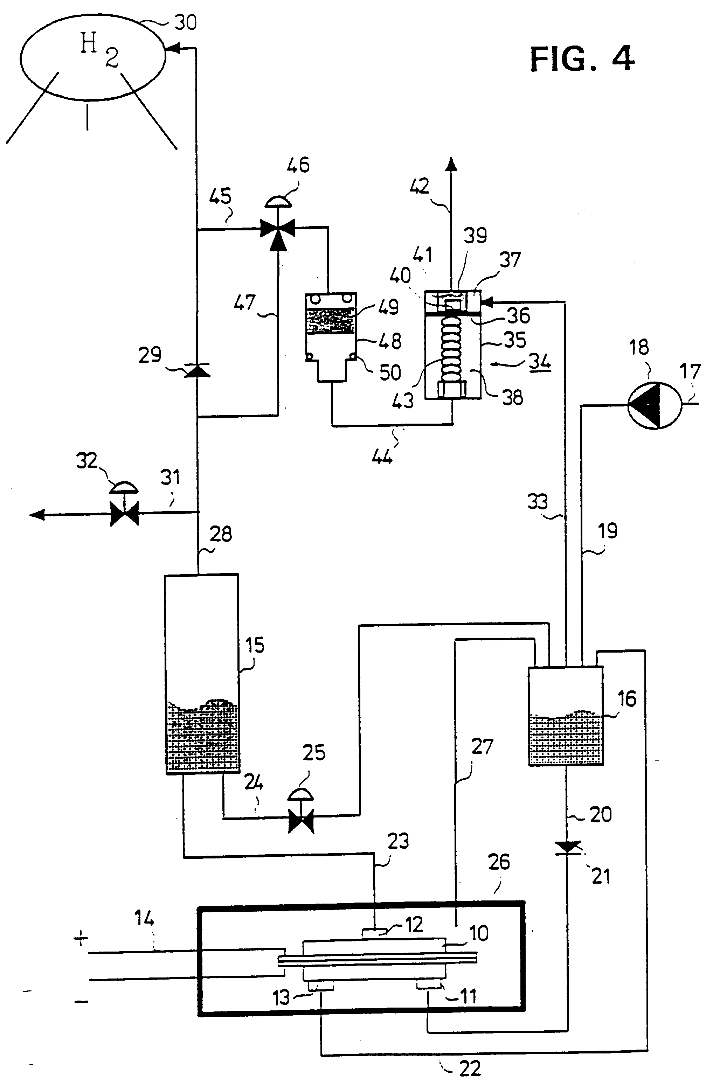

The apparatus shown in Fig. 4 is similar in structure and operation to the apparatus shown in Fig. 2 except that the hydrogen pressure is transmitted hydraulically to the spring side of the overflow valve 34 through line 44. For said purpose, a liquid-filled separator 48 has been added in line 44, comprising a sensitively moving but sealed piston 49. In addition, line 44 and the spring side 38 of the overflow valve 34 are liquid-filled. The separator 48 acts then as a safety means in case the diaphragm 36 of the overflow valve 34 becomes broken so that hydrogen and oxygen gases might become in contact with each other. If the diaphragm 36 breaks, the piston 49 depresses, due to the effect of the hydrogen pressure, to the lower position against the sealing 50, whereby the pressure connection from the hydrogen line 28 to the overflow valve 34 closes and the mixing of the gases is prevented. Naturally a similar arrangement is also useful in the apparatus shown in Figs. 1 and 3.

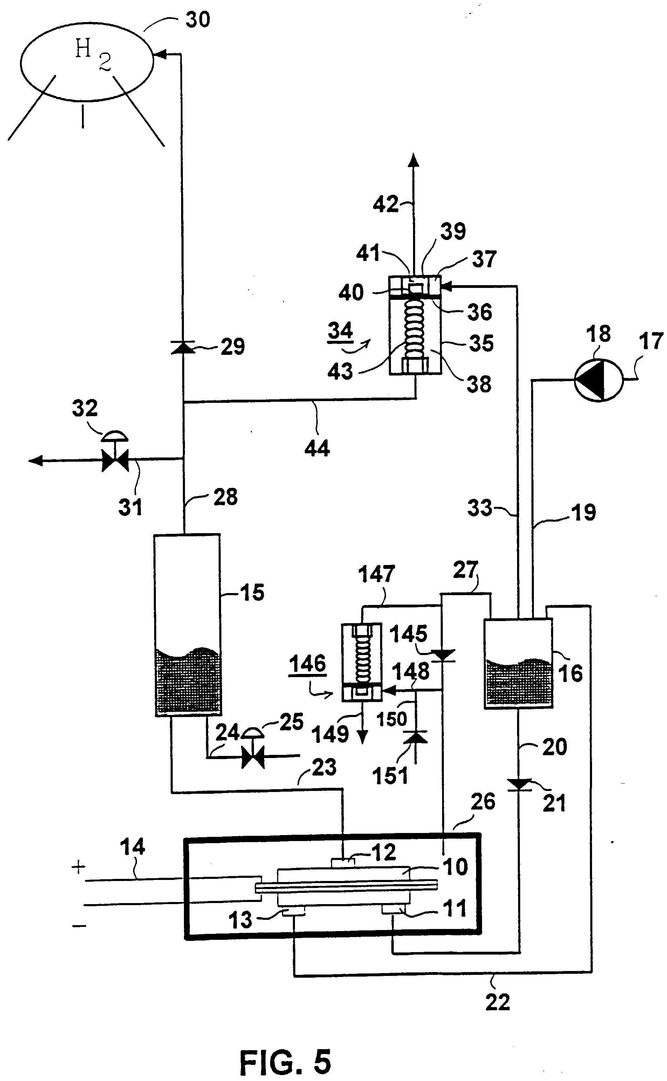

As described above, the pressure shell 26 is maintained pressurized with the pressure of the gas produced in electrolysis, i.e. in the present instance by means of pipe 27 leading to the pressure shell 27 from the water separator 16 of oxygen gas. The amount of the liquid added in the pressure shell 26 is preferably such that the liquid surface rises at least some way up into pipe 27. In the embodiment shown in Fig. 5, a back-pressure valve 145 has been placed in pipe 27 to allow gas flow only in the direction of the pressure shell 26. Therefore, the oxygen gas pressure prevailing in the water separator 16 is transmitted via the pipe 27 and the back-pressure valve 145 to the pressure shell 26 and to the liquid therein.

If the pressures are desired to be discharged out of the electrolysis apparatus for instance for maintenance, the valve 32 in the pipe 31 is opened and hydrogen is allowed to flow out. Hereby, the pressure in pipe 44 decreases and diaphragm 36 allows the oxygen to flow into the outlet pipe 42, whereby the oxygen pressure conforms to a decrease in the hydrogen pressure. The back-pressure valve 29 prevents the flow of hydrogen gas from the hydrogen gas storage 30 into the outlet pipe 31.

Now, the back-pressure valve 145 in the pipe 27 prevents, however, the exit of the pressure out of the pressure shell 26. For that purpose, an overflow valve 146 has been provided, being in structure equivalent to the overflow valve 34. Thus, a pipe 147 has been connected to the spring side of the overflow valve 146 from pipe 27. The discharge side of the overflow valve 146 has been connected to the pipe 27 by means of a pipe 148.

As the pressure in the water separator 16 starts to drop, the pressure of the pressure shell 26 in the spring side of the overflow valve 146 remains at first the same as it was. However, in a given phase the pressure of the pressure shell 26 exceeds the combined pressure of the spring side pressure of the overflow valve and the spring pressure, whereby gas starts to flow out of the overflow valve 146 through pipe 149.

Although it is shown in the embodiment of Fig. 5 that the pressure shell 26 is maintained pressurized with the oxygen pressure entering through the pipe 27 from the water separator of the oxygen gas, it is to be noted that pressurization may be taken from anywhere else where the pressure of the oxygen produced in the electrolytic shell is prevalent. The pipe 27 could, therefore, be conducted for instance from pipe 33 or even from pipe 22, although the latter procedure is not recommended because the oxygen gas passing in pipe 22 contains water. It is equally obvious that the pressurization of the pressure shell may equally be accomplished with the aid of hydrogen pressure, whereby the pipe 27 can be conducted, for instance from the water separator 15 of the hydrogen gas, or from the hydrogen line 28.

The apparatus shown in Fig. 5 prevents the liquid in the pressure shell from entering in liquid or vapour form into the gas circulations of the apparatus, and at the same time it takes care of that the pressure of the pressure shell is enabled to decrease in an instance in which the pressure of the gas source drops. In addition, variable-pressure pressurization is achieved without having to take resort to a separate protective gas for the pressurization and the control thereof. The amount of the gas required in the pressurization is extremely small. It is to be noted specifically that in the apparatus not only hydrogen produced in the electrolytic cell but also oxygen can be used as the pressurization gas without any risk of corrosion.

The spring pressure of the overflow valve 146 is selected appropriately so that the pressure of the pressure shell 26 remains somewhat lower than the pressure of the gas produced in electrolysis. An appropriate pressure is in general of the order of a few bar, at most. When the pressure of the gas source drops and the difference between the pressures of the gas source and the pressure shell 26 is below the spring pressure of the overflow valve 146, the pressure from the flow channel 27 between the back-pressure valve 145 and the pressure shell 26 is enabled to be discharged via pipes 148 and 149, for instance, out into free air.

The embodiment shown in Fig. 5 can be applied irrespective of whether oxygen or hydrogen is used for pressurizing the pressure shell 26. Not even in using hydrogen, the discharge of the pressure of the pressure shell 26 into the free air will cause any risk or danger because the gas quantities to be released are in any case very small.

The operating principle of the overflow valve shown in the apparatuses of Figs. 1-4, however, causes that, when the pressure of the oxygen side drops below the hydrogen pressure (for instance because of leakage produced in the oxygen pipe), the hydrogen pressure is inhibited from complying to the oxygen pressure. In spite of a decrease in the pressure of the oxygen side, the hydrogen pressure increases while the electrolytic cell is in operation, with the result that the electrolytic cells may break.

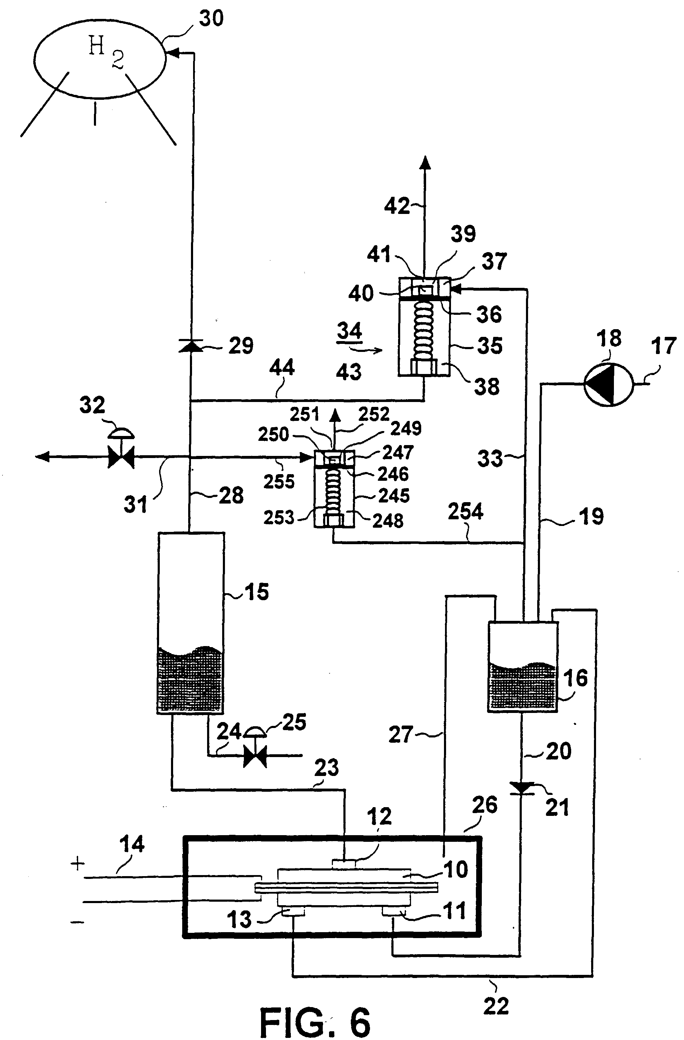

The embodiment shown in Fig. 6 provides a safety system by means of which said drawback can be eliminated.

In the apparatus according to Fig. 6, the above-mentioned, modified overflow valve is used in accordance with Figs. 1-4 both for maintaining the hydrogen and oxygen pressures in a given ratio in a variable-pressure electrolysis apparatus and as a safety means for decreasing the hydrogen pressure in an instance in which the pressure of the oxygen side would for one reason or another drop.

The embodiment shown in Fig. 6 differs from Fig. 1 in that an overflow valve 245 has been added into the apparatus to attend to a drop in the hydrogen pressure in line 28 when there occurs a pressure drop in the oxygen line 33. The overflow valve 245 is provided with two compartments 247 and 248 separated by a sealed diaphragm 246. Compartment 247 comprises a seat 249 provided with an aperture 250 and a channel 251 leading from the aperture through the seat 249. The hydrogen gas is enabled to flow via line 255 to compartment 247 of the overflow valve 245, and further through aperture 250 and channel 251 to hydrogen discharge pipe 252. The other compartment 248 of the overflow valve 245 contains a spring 253, which presses the diaphragm 246. Thus the hydrogen gas is enabled to flow via aperture 250 and channel 251 to the hydrogen discharge pipe 252 only when the pressure thereof exceeds a given value. An essential feature of the operation of the overflow valve 245 is furthermore that the compartment 248 containing the spring 253 is also connected to the oxygen pressure, i.e. to line 33, or also to the water separator 16 of oxygen gas, for instance via pipe 254.

In the overflow valve 245 used as a safety means in the apparatus shown in Fig. 6 the rigidness of the spring 253 has been so set that a requisite pressure difference between the gases in order to release hydrogen out is high enough so that unnecessary leakage will not occur (for instance 5 to 6 bar).

Any liquid which is electrically non-conducting, inert relative to hydrogen or oxygen, non-corrosive to the materials used, and enduring concerning the operating temperature conditions can be used in the pressure shell 26. The price and non-toxicity are also aspects to be considered.

Therefore, in an apparatus according to the invention for instance silicon oils or fats, fluorized oils, oil-based or synthetic lubricants and even distilled or ion-exchanged water can be applied. A problem of the last-mentioned is, however, poor frost resistance and that it may cause electrochemical corrosion, particularly in association with oxygen. Neither can any ordinary oils be used together with oxygen.

Examples of appropriate pressurization liquids are particularly silicon oils and fats, such as "Dow Corning 200 Fluid" manufactured by Company Dow Corning or "Rhodosil" oil by company Rhone-Poulenc.

In the embodiments according to Figs. 1-6 oxygen is described as the first product gas and hydrogen as the second product gas. However, with regard to the operation of the process and the apparatus according to the invention, it makes no difference which is the first product gas and, correspondingly, the second product gas.

## Claims

1. A procedure for controlling pressure in an electrolysis apparatus which produces hydrogen and oxygen by decomposing electrolytic liquid with the aid of electric current and which apparatus comprises a closed pressurized electrolytic cell (10) for producing hydrogen and oxygen, a hydrogen line (23,28) for conducting hydrogen out of the electrolytic cell (10) into a hydrogen storage (30), an oxygen line (22,33) for conducting oxygen out of the electrolytic cell (10), and feed means (17,18,19, 20,21) for supplying electrolytic liquid into the electrolytic cell (10), **characterized** in that between the pressure of the oxygen line (33) and the pressure of the hydrogen line (28) a given pressure difference is maintained by conducting a first product gas discharging from the system through one or more spring-loaded overflow valves (34,34a,34b) so that the pressure prevailing in the line (28) containing a second product gas is conducted to the spring side of the overflow valve (34,34a,34b).

2. Procedure according to claim 1, **characterized** in that a given overpressure or underpressure compared with the pressure of the hydrogen line (28) is maintained in oxygen line (33) by conducting the hydrogen pressure to the spring side of the overflow valve (34,34a,34b) from a point after a back-pressure valve (29) in the hydrogen line (28) or, respectively, from a point before the back-pressure valve (29).

3. Procedure according to claim 1 or 2, **characterized** in that a given pressure difference is maintained between the pressure of the oxygen line (33) and the hydrogen line (28) using two overflow valves (34a,34b) placed in the oxygen line (33), whereby the pressure of the hydrogen line (28) is conducted to the spring side of the second overflow valve (34b) from a point located before the back-pressure valve (29) placed in the hydrogen line (28), and the pressure of the hydrogen line (28) is conducted to the spring side of the first overflow valve (34a) from a point which is located after the back-pressure valve (29) placed in the hydrogen line (28).

4. Electrolysis apparatus for producing hydrogen and oxygen by decomposing electrolytic liquid with the aid of electric current, **characterized** in that the apparatus comprises at least the following components:
(a) a closed pressurized electrolytic cell (10) for producing hydrogen and oxygen with the aid of electric current,
(b) a hydrogen line (23,28) for conducting hydrogen out of the interior of the electrolytic cell (10) to a hydrogen storage (30),
(c) an oxygen line (22,33) for conducting oxygen out of the interior of the electrolytic cell (10),
(d) feed means (17,18,19,20,21) for supplying electrolytic liquid into the electrolytic cell (10), and
(e) means for maintaining a given pressure difference between the pressure of a first product-gas line (33) and the pressure of a second product-gas line (28), said means comprising one or more overflow valves (34,34a,34b) placed in the first product-gas line (33) and means for conducting the pressure of the second product-gas line (28) to the spring side of the overflow valve (34,34a,34b).

5. Apparatus according to claim 4, **characterized** in that the means for conducting the pressure of the hydrogen line (28) to the spring side (38) of the overflow valve (34) comprise a back-pressure valve (29) in the hydrogen line (28) and a line (44,45,47,47a) for conducting the pressure of the hydrogen line (28) to the spring side of the overflow valve (34).

6. Apparatus according to claim 5, **characterized** in that said line (44,47,47a) provides a connection from the spring side of the overflow valve (34) to a point in the hydrogen line (28) before the back-pressure valve (29).

7. Apparatus according to claim 5, **characterized** in that said line (44,45) provides a connection from the spring side of the overflow valve (34) to a point in the hydrogen line (28) after the back-pressure valve (29).

8. Apparatus according to claim 6 or 7, **characterized** in that it also comprises a three-way valve (46) for providing a connection (44,45,47) from the spring side of the overflow valve (34) to a point of the hydrogen line (28) located before the back-pressure valve (29) or thereafter.

9. An electrolysis apparatus according to any one of claims 4 to 8, **characterized** in that it comprises two overflow valves (34a,34b) and lines (44,47a) for conducting the pressure in the hydrogen line (28) to the spring side of the overflow valves (34a,34b) so that the spring side of the second overflow valve (34b) is connected to a point in the hydrogen line (28) before the back-pressure valve (29) and the spring side of the first overflow valve (34a) is connected to a point in the hydrogen line (28) after the back-pressure valve (29).

10. Electrolysis apparatus according to any one of claims 4 to 9, **characterized** in that the electrolytic cell (10) has been positioned within a protective shell (26) pressurized with the pressure of a gas produced in electrolysis.

11. Electrolysis apparatus according to claim 10, **characterized** in that the protective shell (26) has been filled in with an inert liquid and pressurized with the pressure of the oxygen line (27,33).

12. Electrolysis apparatus according to any one of claims 4 to 11, **characterized** in that the apparatus comprises liquid separators (15,16) for separating electrolytic liquid from gases passing through the hydrogen line (23,28) and the oxygen line (22,33).

13. Electrolysis apparatus according to any one of claims 4 to 12, **characterized** in that the gas volume of the hydrogen line (23,28) between the electrolytic cell (10) and the back-pressure valve (29) in the hydrogen line (28) is at least twice greater, but preferably more than twice greater than the gas volume of the oxygen line (22,33) between the electrolytic cell (10) and the overflow valve (34) placed in the oxygen line (33).

14. Electrolysis apparatus according to any one of claims 4 to 13, **characterized** in that the hydrogen pressure to the spring side of the overflow valve (34) is transmitted hydraulically by means of a liquid in line (44).

15. Electrolysis apparatus according to claim 14, **characterized** in that said line (44) comprises a gas/liquid separator (48) provided with a piston (49), in which separator the piston (49) due to the influence of hydrogen pressure shuts the connection to the spring side of the overflow valve (34) if the valve diaphragm (36) breaks.

16. An electrolysis apparatus for producing hydrogen by decomposing water-containing liquid with the aid of electric current into hydrogen and oxygen in a pressurized electrolytic cell (10) so that the electrolytic cell (10) is positioned within a pressure shell (26) filled with a liquid, **characterized** in that the apparatus is provided with means for conducting the pressure of a gas produced in electrolysis into the pressure shell (26), said means comprising a flow channel (27) from a source (16,33) of a gas produced in electrolysis to the pressure shell (26), a back-pressure valve (145) placed in the flow channel (27) allowing a gas flow only in the direction of the pressure shell (26), and an overflow valve (146), to the spring side thereof being conducted the pressure of said gas source (16,33) and to the discharge side thereof being conducted the pressure of said pressure shell (26).

17. Apparatus according to claim 16, **characterized** in that in said flow channel (27) oxygen pressure is prevalent.

18. Apparatus according to claim 16, **characterized** in that in said flow channel (27) hydrogen pressure is prevalent.

19. Apparatus according to any one of claims 16-18, **characterized** in that said means comprise a pipe (147) leading from said flow channel (27) to the spring side of the overflow valve (146), and a pipe (148) leading from the flow channel (27) to the discharge side of the overflow valve (146).

20. Apparatus according to claim 19, **characterized** in that the pipe (148) is connected out into the free air by means of a pipe (150) and a back-pressure valve (151) in order to prevent potential underpressure in the pipe (27) between the back-pressure valve (145) and the pressure shell (26).

21. An electrolysis apparatus for producing hydrogen and oxygen by decomposing electrolytic liquid with the aid of electric current, said apparatus comprising a closed pressurized electrolytic cell (10) for producing hydrogen and oxygen with the aid of electric current, a hydrogen line (23,28) for conducting hydrogen out of the interior of the electrolytic cell (10) into a hydrogen storage (30), an oxygen line (22,33) for conducting oxygen out of the interior of the electrolytic cell (10), and means for maintaining a given pressure difference between the pressure of the oxygen line (33) and the pressure of the hydrogen line (28), **characterized** in that the apparatus comprises an overflow valve (245) connected to the hydrogen/oxygen line (28), and means for conducting the pressure of the oxygen/hydrogen line (33) to the spring side (248) of the overflow valve (245).

22. Apparatus according to claim 21, **characterized** in that the means for conducting the pressure of the oxygen line to the spring side (248) of the overflow valve (245) comprise a pipe system (254) leading from a point of the oxygen line (22,16,33) to the spring side (248) of the overflow valve.

23. Apparatus according to claim 21 or 22, **characterized** in that said hydrogen line (28) is provided with a back-pressure valve (29) allowing flowing only from the electrolytic cell (10) in the direction of the hydrogen container (30) and that the overflow valve (245) is connected to a point of the hydrogen line (28) located between the electrolytic cell (10) and said back-pressure valve (29).

## Patentansprüche

1. Kontrollverfahren für den Druck in einer Elektrolysevorrichtung, die Wasserstoff und Sauerstoff dadurch erzeugt, daß elektrolytische Flüssigkeit mit Hilfe von elektrischem Strom zersetzt wird, und welche Vorrichtung eine geschlossene druckbeaufschlagte Elektrolysezelle (10) für die Erzeugung von Wasserstoff und Sauerstoff, eine Wasserstoffleitung (23, 28) für das Leiten von Wasserstoff aus der Elektrolysezelle (10) in einen Wasserstoffspeicher (30), eine Sauerstoffleitung (22, 33) für das Leiten von Sauerstoff aus der Elektrolysezelle (10) und Zufuhreinrichtungen (17, 18, 19, 20, 21) für das Einspeisen elektrolytischer Flüssigkeit in die Elektrolysezelle (10) hat, dadurch gekennzeichnet, daß zwischen dem Druck in der Sauerstoffleitung (33) und dem Druck in der Wasserstoffleitung (28) eine gegebene Druckdifferenz dadurch aufrechterhalten wird, daß ein erstes Produktgas, das von dem System ausströmt, durch ein oder mehrere federbelastete Überströmventile (34, 34a, 34b) geleitet wird, so daß der Druck, der in der Leitung (28) vorherrscht, die ein zweites Produktgas enthält, zu der Federseite des Überströmventiles (34, 34a, 34b) geleitet wird.

2. Verfahren gemäß Patentanspruch 1, dadurch gekennzeichnet, daß ein gegebener Überdruck oder Unterdruck im Vergleich zu dem Druck in der Wasserstoffleitung (28) in der Sauerstoffleitung (33) dadurch aufrechterhalten wird, daß der Wasserstoffdruck zu der Federseite des Überströmventiles (34, 34a, 34b) geleitet wird, und zwar von einem Punkt nach einem Rückschlagventil (29) in der Wasserstoffleitung (28) beziehungsweise von einem Punkt vor dem Rückschlagventil (29).

3. Verfahren gemäß Patentanspruch 1 oder 2, dadurch gekennzeichnet, daß eine gegebene Druckdifferenz zwischen dem Druck in der Sauerstoffleitung (33) und der Wasserstoffleitung (28) unter Verwendung zweier in der Sauerstoffleitung (33) angeordneter Überströmventile (34a, 34b) aufrecht erhalten wird, wobei der Druck in der Wasserstoffleitung (28) zu der Federseite des zweiten Überströmventiles (34b) geleitet wird, und zwar ausgehend von einem Punkt, der vor dem in der Wasserstoffleitung (28) angeordneten Rückschlagventil (29) angeordnet ist, und der Druck in der Wasserstoffleitung (28) zu der Federseite des ersten Überströmventiles (34a) geleitet wird, und zwar ausgehend von einem Punkt, der nach dem in der Wasserstoffleitung (28) angeordneten Rückschlagventil (29) angeordnet ist.

4. Elektrolysevorrichtung zur Erzeugung von Wasserstoff und Sauerstoff durch Zersetzen elektrolytischer Flüssigkeit mit Hilfe von elektrischem Strom, dadurch gekennzeichnet, daß die Vorrichtung zumindest die folgenden Bauteile aufweist:
(a) eine geschlossene druckbeaufschlagte Elektrolysezelle (10) für das Erzeugen von Wasserstoff und Sauerstoff mit Hilfe von elektrischem Strom,
(b) eine Wasserstoffleitung (23, 28) für das Leiten von Wasserstoff aus dem Inneren der Elektrolysezelle (10) zu einem Wasserstoffspeicher (30),
(c) eine Sauerstoffleitung (22, 33) für das Leiten von Sauerstoff aus dem Inneren der Elektrolysezelle (10),
(d) Zufuhreinrichtungen (17, 18, 19, 20, 21) für das Einspeisen elektrolytischer Flüssigkeit in die Elektrolysezelle (10), und
(e) Einrichtungen für das Aufrechterhalten einer gegebenen Druckdifferenz zwischen dem Druck einer ersten Produktgasleitung (33) und dem Druck einer zweiten Produktgasleitung (28), wobei die Einrichtung ein oder mehrere Überströmventile (34, 34a, 34b) aufweist, die in der ersten Produktgasleitung (33) angeordnet sind, und Einrichtungen für das Leiten des Druckes in der zweiten Produktgasleitung (28) zu der Federseite des Überströmventiles (34, 34a, 34b) aufweist.

5. Vorrichtung gemäß Patentanspruch 4, dadurch gekennzeichnet, daß die Einrichtung für das Leiten des Druckes der Wasserstoffleitung (28) zu der Federseite (38) des Überströmventiles (34) ein Rückschlagventil (29) in der Wasserstoffleitung (28) und eine Leitung (44, 45, 47, 47a) für das Leiten des Druckes der Wasserstoffleitung (28) zu der Federseite des Überströmventiles (34) aufweist.

6. Vorrichtung gemäß Patentanspruch 5, dadurch gekennzeichnet, daß die Leitung (44, 47, 47a) eine Verbindung von der Federseite des Überströmventiles (34) zu einem vor dem Rückschlagventil (29) befindlichen Punkt in der Wasserstoffleitung (28) vorsieht.

7. Vorrichtung gemäß Patentanspruch 5, dadurch gekennzeichnet, daß die Leitung (44, 45) eine Verbindung von der Federseite des Überströmventiles (34) zu einem nach dem Rückschlagventil (29) befindlichen Punkt in der Wasserstoffleitung (28) vorsieht.

8. Vorrichtung gemäß Patentanspruch 6 oder 7, dadurch gekennzeichnet, daß sie ebenso ein Dreiwegeventil (46) für das Vorsehen einer Verbindung (44, 45, 47) von der Federseite des Überströmventiles (34) zu einem vor oder nach dem Rückschlagventil (29) angeordneten Punkt der Wasserstoffleitung (28) aufweist.

9. Elektrolysevorrichtung gemäß einem der Patentansprüche 4 bis 8, dadurch gekennzeichnet, daß sie zwei Überströmventile (34a, 34b) und Leitungen (44, 47a) für das Leiten des Druckes in der Wasserstoffleitung (28) zu der Federseite der Überströmventile (34a, 34b) aufweist, so daß die Federseite des zweiten Überströmventiles (34b) vor dem Rückschlagventil (29) mit einem Punkt in der Wasserstoffleitung (28) verbunden ist und die Federseite des ersten Überströmventiles (34a) nach dem Rückschlagventil (29) mit einem Punkt in der Wasserstoffleitung (28) verbunden ist.

10. Elektrolysevorrichtung gemäß einem der Patentansprüche 4 bis 9, dadurch gekennzeichnet, daß die Elektrolysezelle (10) innerhalb eines Schutzgehäuses (26) positioniert worden ist, das mit dem Druck eines in der Elektrolyse erzeugten Gases druckbeaufschlagt ist.

11. Elektrolysevorrichtung gemäß Patentanspruch 10, dadurch gekennzeichnet, daß das Schutzgehäuse (26) mit einer Inertflüssigkeit gefüllt worden ist und mit dem Druck der Sauerstoffleitung (27, 33) druckbeaufschlagt worden ist.

12. Elektrolysevorrichtung gemäß einem der Patentansprüche 4 bis 11, dadurch gekennzeichnet, daß die Vorrichtung Flüssigkeitsabscheider (15, 16) zum Abscheiden elektrolytischer Flüssigkeit von durch die Wasserstoffleitung (23, 28) und die Sauerstoffleitung (22, 33) strömenden Gasen aufweist.

13. Elektrolysevorrichtung gemäß einem der Patentansprüche 4 bis 12, dadurch gekennzeichnet, daß das Gasvolumen der Wasserstoffleitung (23, 28) zwischen der Elektrolysezelle (10) und dem Rückschlagventil (29) in der Wasserstoffleitung (28) zumindest um das zweifache, jedoch vorzugsweise um mehr als das zweifache, größer ist als das Gasvolumen der Sauerstoffleitung (22, 33) zwischen der Elektrolysezelle (10) und dem in der Sauerstoffleitung (33) angeordneten Überströmventil (34).

14. Elektrolysevorrichtung gemäß einem der Patentansprüche 4 bis 13, dadurch gekennzeichnet, daß der Wasserstoffdruck zu der Federseite des Überströmventiles (34) mittels einer Flüssigkeit in der Leitung (44) hydraulisch übermittelt wird.

15. Elektrolysevorrichtung gemäß Patentanspruch 14, dadurch gekennzeichnet, daß die Leitung (44) einen Gas-/Flüssigkeitsabscheider (48) aufweist, der mit einem Kolben (49) versehen ist, in welchem Abscheider der Kolben (49) aufgrund des Einflusses von Wasserstoffdruck die Verbindung zu der Federseite des Überströmventiles (34) schließt, wenn das Ventildiaphragma (36) zu Bruch geht.

16. Elektrolysevorrichtung für das Erzeugen von Wasserstoff durch Zersetzen von wasserhaltiger Flüssigkeit mit Hilfe von elektrischem Strom in Wasserstoff und Sauerstoff in einer druckbeaufschlagten Elektrolysezelle (10), so daß die Elektrolysezelle (10) innerhalb eines mit einer Flüssigkeit gefüllten Druckgehäuses (26) positioniert ist, dadurch gekennzeichnet, daß die Vorrichtung mit Einrichtungen für das Leiten des Druckes eines in der Elektrolyse erzeugten Gases in das Druckgehäuse (26) versehen ist, wobei die Einrichtung einen Strömungskanal (27) von einer Quelle (16, 33) eines in der Elektrolyse erzeugten Gases zu dem Druckgehäuse (26), ein in dem Strömungskanal (27) angeordnetes Rückschlagventil (145), das eine Gasströmung lediglich in Richtung auf das Druckgehäuse (26) gestattet, und ein Überströmventil(146) aufweist, wobei zu dessen Federseite der Druck der Gasquelle (16, 33) geleitet wird und zu dessen Ausstoßseite der Druck des Druckgehäuses (26) geleitet wird.

17. Vorrichtung gemäß Patentanspruch 16, dadurch gekennzeichnet, daß in dem Strömungskanal (27) Sauerstoffdruck vorherrschend ist.

18. Vorrichtung gemäß Patentanspruch 16, dadurch gekennzeichnet, daß in dem Strömungskanal (27) Wasserstoffdruck vorherrschend ist.

19. Vorrichtung gemäß einem der Patentansprüche 16 bis 18, dadurch gekennzeichnet, daß die Einrichtung eine Rohrleitung (147) aufweist, die von dem Strömungskanal (27) zu der Federseite des Überströmventiles (146) führt, und eine Rohrleitung (148) aufweist, die von dem Strömungskanal (27) zu der Ausstoßseite des Überströmventiles (146) führt.

20. Vorrichtung gemäß Patentanspruch 19, dadurch gekennzeichnet, daß die Rohrleitung (148) nach außen mit der Freiluft verbunden ist, und zwar mittels einer Rohrleitung (150) und eines Rückschlagventiles (151), um einen möglichen Unterdruck in der Rohrleitung (27) zwischen dem Rückschlagventil (145) und dem Druckgehäuse (26) verhindern.

21. Elektrolysevorrichtung zur Erzeugung von Wasserstoff und Sauerstoff durch Zersetzen elektrolytischer Flüssigkeit mit Hilfe von elektrischem Strom, dadurch gekennzeichnet, daß die Vorrichtung zumindest die folgenden Bauteile aufweist: eine geschlossene druckbeaufschlagte Elektrolysezelle (10) für das Erzeugen von Wasserstoff und Sauerstoff mit Hilfe von elektrischem Strom, eine Wasserstoffleitung (23, 28) für das Leiten von Wasserstoff aus dem Inneren der Elektrolysezelle (10) zu einem Wasserstoffspeicher (30), eine Sauerstoffleitung (22, 33) für das Leiten von Sauerstoff aus dem Inneren der Elektrolysezelle (10) und Einrichtungen für das Aufrechterhalten einer gegebenen Druckdifferenz zwischen dem Druck der Sauerstoffleitung (33) und dem Druck der Wasserstoffleitung (28), dadurch gekennzeichnet, daß die Vorrichtung ein mit der Wasserstoff/Sauerstoffleitung (28) verbundenes Überströmventil (245) und Einrichtungen zum Leiten des Druckes der Sauerstoff/Wasserstoffleitung (33) zu der Federseite (248) des Überströmventiles (245) aufweist.

22. Vorrichtung gemäß Patentanspruch 21, dadurch gekennzeichnet, daß die Einrichtung für das Leiten des Druckes der Sauerstoffleitung zu der Federseite (248) des Überströmventiles (245) ein Rohrleitungssystem (254) aufweist, das von einem Punkt der Sauerstoffleitung (22, 16, 33) zu der Federseite (248) des Überströmventiles führt.

23. Vorrichtung gemäß Patentanspruch 21 oder 22, dadurch gekennzeichnet, daß die Wasserstoffleitung (28) mit einem Rückschlagventil (29) versehen ist, daß ein Strömen lediglich von der Elektrolysezelle (10) in Richtung auf den Wasserstoffbehälter (30) gestattet, und daß das Überströmventil (245) mit einem Punkt der Wasserstoffleitung (28) verbunden ist, der zwischen der Elektrolysezelle (10) und dem Rückschlagventil (29) verbunden ist.

## Revendications

1. Un procédé pour la régulation de la pression dans un appareil d'électrolyse qui produit de l'hydrogène et de l'oxygène par décomposition d'un liquide électrolytique à l'aide d'un courant électrique, lequel appareil comprend une cellule électrolytique sous pression fermée (10) pour la production d'hydrogène et d'oxygène, une canalisation d'hydrogène (23,28) pour extraire l'hydrogène de la cellule électrolytique (10) en direction d'un stockage d'hydrogène (30), une canalisation d'oxygène (22,33) pour extraire l'oxygène de la cellule électrolytique (10) et un dispositif d'alimentation (17,18,19,20,21) pour alimenter la cellule électrolytique (10) en liquide électrolytique, caractérisé en ce qu'on maintient une différence de pression donnée entre la pression de la canalisation d'oxygène (33) et la pression de la canalisation d'hydrogène (28) en envoyant un premier produit gazeux se dégageant du système à travers une ou plusieurs soupapes de décharge à ressort (34,34a,34b) de manière que la pression régnant dans la canalisation (28) contenant un deuxième produit gazeux soit dirigée vers le côté ressort de la soupape de décharge (34,34a,34b).

2. Procédé selon la revendication 1, caractérisé en ce qu'on maintient dans la canalisation d'oxygène (33) une surpression ou une dépression donnée par rapport à la pression de la canalisation d'hydrogène (28) en dirigeant la pression d'hydrogène vers le côté ressort de la soupape de décharge (34,34a,34b) à partir d'un point situé après un clapet de retenue (29) dans la canalisation d'hydrogène (28) ou, respectivement à partir d'un point situé avant le clapet de retenue (29).

3. Procédé selon la revendication 1 ou 2, caractérisé en ce qu'on maintient une différence de pression donnée entre la pression de la canalisation d'oxygène (33) et celle de la canalisation d'hydrogène (28) en utilisant deux soupapes de décharge (34a,34b) placées dans la canalisation d'oxygène (33), moyennant quoi la pression de la canalisation d'hydrogène (28) est dirigée vers le côté ressort de la deuxième soupape de décharge (34b) à partir d'un point placé avant le clapet de retenue (29) se trouvant dans la canalisation d'hydrogène (28) et la pression de la canalisation d'hydrogène (28) est dirigée vers le côté ressort de la première soupape de décharge (34a) à partir d'un point qui est situé après le clapet de retenue (29) placé dans la canalisation d'hydrogène (28).

4. Appareil d'électrolyse pour la production d'hydrogène et d'oxygène par décomposition d'un liquide électrolytique à l'aide d'un courant électrique, caractérisé en ce que l'appareil comprend au moins les éléments suivants :
a) une cellule électrolytique sous pression fermée (10) pour la production d'hydrogène et d'oxygène à l'aide d'un courant électrique,
b) une canalisation d'hydrogène (23,28) pour extraire l'hydrogène de l'intérieur de la cellule électrolytique (10) vers un stockage d'hydrogène (30),
c) une canalisation d'oxygène (22,23) pour extraire l'oxygène de l'intérieur de la cellule électrolytique (10),
d) un dispositif d'alimentation (17,18,19,20,21) pour alimenter la cellule électrolytique (10) en liquide électrolytique et
e) un dispositif pour maintenir une différence de pression donnée entre la pression d'une première canalisation de produit gazeux (33) et la pression d'une deuxième canalisation de produit gazeux (28), ledit dispositif comprenant une ou plusieurs soupapes de décharge (34,34a,34b) placées dans la première canalisation de produit gazeux (33) et un dispositif pour diriger la pression de la deuxième canalisation de produit gazeux (28) vers le côté ressort de la soupape de décharge (34,34a,34b).

5. Appareil selon la revendication 4, caractérisé en ce que le dispositif pour diriger la pression de la canalisation d'hydrogène (28) vers le côté ressort (38) de la soupape de décharge (34) comprend un clapet de retenue (29) dans la canalisation d'hydrogène (28) et une canalisation (44, 45,47,47a) pour diriger la pression de la canalisation d'hydrogène (28) vers le côté ressort de la soupape de décharge (34).

6. Appareil selon la revendication 5, caractérisé en ce que ladite canalisation (44,47,47a) assure la liaison à partir du côté ressort de la soupape de décharge (34) vers un point dans la canalisation d'hydrogène (28) situé avant le clapet de retenue (29).

7. Appareil selon la revendication 5, caractérisé en ce que ladite canalisation (44,45) assure la liaison à partir du côté ressort de la soupape de décharge (34) vers un point dans la canalisation d'hydrogène (28) après la soupape de retenue (29).

8. Appareil selon la revendication 6 ou 7, caractérisé en ce qu'il comprend également une vanne à trois voies (46) pour assurer le raccordement (44,45,47) à partir du côté ressort de la soupape de décharge (34) vers un point de la canalisation d'hydrogène (28) placé avant le clapet de retenue (29) ou après.

9. Un appareil d'électrolyse selon l'une quelconque des revendications 4 à 8, caractérisé en ce qu'il comprend deux soupapes de décharge (34a,34b) et des canalisations (44,47a) pour diriger la pression dans la canalisation d'hydrogène (28) vers le côté ressort des soupapes de décharge (34a,34b) de manière que le côté ressort de la deuxième soupape de décharge (34b) soit relié à un point dans la canalisation d'hydrogène (28) placé avant le clapet de retenue (29) et que le côté ressort de la première soupape de décharge (34a) soit relié à un point de la canalisation d'hydrogène (28) situé après le clapet de retenue (29).

10. Appareil d'électrolyse selon l'une quelconque des revendications 4 à 9, caractérisé en ce que la cellule électrolytique (10) a été placée à l'intérieur d'une enveloppe protectrice (26) mise sous pression par la pression d'un gaz produit lors de l'électrolyse.

11. Appareil d'électrolyse selon la revendication 10, caractérisé en ce que l'enveloppe protectrice (26) a été remplie d'un liquide inerte et mise sous pression par la pression de la canalisation d'oxygène (27,33).

12. Appareil d'électrolyse selon l'une quelconque des revendications 4 à 11, caractérisé en ce que l'appareil comprend des séparateurs de liquide (15,16) pour séparer le liquide électrolytique dès gaz traversant la canalisation d'hydrogène (23,28) et la canalisation d'oxygène (22,33).

13. Appareil d'électrolyse selon l'une quelconque des revendications 4 à 12, caractérisé en ce que le volume gazeux de la canalisation d'hydrogène (23,28) entre la cellule électrolytique (10) et le clapet de retenue (29) dans la canalisation d'hydrogène (28) est au moins deux fois supérieur, mais de préférence plus de deux fois supérieur au volume gazeux de la canalisation d'oxygène (22,33) entre la cellule électrolytique (10) et la soupape de décharge (34) placée sur la canalisation d'oxygène (33).

14. Appareil d'électrolyse selon l'une quelconque des revendications 4 à 13, caractérisé en ce que la pression d'hydrogène exercée sur le côté ressort de la soupape de décharge (34) est transmise par voie hydraulique au moyen d'un liquide dans la canalisation (44).

15. Appareil d'électrolyse selon la revendication 14, caractérisé en ce que ladite canalisation (44) comprend un séparateur gaz/liquide (48) muni d'un piston (49), séparateur dans lequel le piston (49) interrompt, sous l'effet de la pression d'hydrogène, la liaison vers le côté ressort de la soupape de décharge (34) en cas de rupture du diaphragme de la soupape (36).

16. Un appareil d'électrolyse pour la production d'hydrogène par décomposition d'un liquide contenant de l'eau en hydrogène et en oxygène à l'aide d'un courant électrique dans une cellule électrolytique sous pression (10) de telle façon que la cellule électrolytique (10) soit placée dans une enveloppe sous pression (26) remplie d'un liquide, caractérisé en ce que l'appareil est doté d'un dispositif pour diriger la pression d'un gaz produit au cours de l'électrolyse vers l'enveloppe sous pression (26), ledit dispositif comprenant un canal d'écoulement (27) à partir d'une source (16,33) de gaz produit au cours de l'électrolyse en direction de l'enveloppe sous pression (26), un clapet de retenue (145) disposé dans le canal d'écoulement (27) permettant un écoulement de gaz uniquement dans la direction de l'enveloppe sous pression (26) et une soupape de décharge (146) vers le côté ressort de laquelle est envoyée la pression de ladite source de gaz (16,33) et vers le côté décharge de laquelle est envoyée la pression de ladite enveloppe sous pression (26).

17. Appareil selon la revendication 16, caractérisé en ce que la pression d'oxygène est prédominante dans ledit canal d'écoulement (27).

18. Appareil selon la revendication 16, caractérisé en ce que la pression d'hydrogène est prédominante dans ledit canal d'écoulement (27).

19. Appareil selon l'une quelconque des revendications 16 à 18, caractérisé en ce que ledit dispositif comprend une conduite (147) menant dudit canal d'écoulement (27) vers le côté ressort de la soupape de décharge (146) et une conduite (148) menant du canal d'écoulement (27) vers le côté décharge de la soupape de décharge (146).

20. Appareil selon la revendication 19, caractérisé en ce que la conduite (148) est reliée à l'air libre au moyen d'une conduite (150) et d'un clapet de retenue (151) afin d'empêcher une dépression potentielle dans la conduite (27) entre le clapet de retenue (145) et l'enveloppe sous pression (26).

21. Un appareil d'électrolyse pour la production d'hydrogène et d'oxygène par décomposition d'un liquide électrolytique à l'aide d'un courant électrique, ledit appareil comprenant une cellule électrolytique sous pression fermée (10) pour la production d'hydrogène et d'oxygène à l'aide d'un courant électrique, une canalisation d'hydrogène (23,28) pour extraire l'hydrogène de l'intérieur de la cellule électrolytique (10) vers un stockage d'hydrogène (30), une canalisation d'oxygène (22,33) pour extraire l'oxygène de l'intérieur de la cellule électrolytique (10) et un dispositif pour maintenir une différence de pression donnée entre la pression de la canalisation d'oxygène (33) et la pression de la canalisation d'hydrogène (28), caractérisé en ce que l'appareil comprend une soupape de décharge (245) raccordée à une canalisation d'hydrogène/oxygène (28) et un dispositif pour diriger la pression de la canalisation d'oxygène/hydrogène (33) vers le côté ressort (248) de la soupape de décharge (245).

22. Appareil selon la revendication 21, caractérisé en ce que le dispositif de transmission de la pression de la canalisation d'oxygène en direction du côté ressort (248) de la soupape de décharge (245) comporte un système de conduites (254) conduisant d'un point de la canalisation d'oxygène (22,16,33) vers le côté ressort (248) de la soupape de décharge.

23. Appareil selon la revendication 21 ou 22, caractérisé en ce que ladite canalisation d'hydrogène (28) est munie d'un clapet de retenue (29) permettant uniquement l'écoulement à partir de la cellule électrolytique (10) en direction du réservoir d'hydrogène (30) et que la soupape de décharge (245) est raccordée à un point de la canalisation d'hydrogène (28) situé entre la cellule électrolytique (10) et ledit clapet de retenue (29).
